# EUROPÄISCHE PATENTSCHRIFT

(11) **EP 0 852 800 B1**
(45) Veröffentlichungstag und Bekanntmachung des Hinweises auf die Patenterteilung: **15.12.1999**
(21) Anmeldenummer: 96932539.8
(22) Anmeldetag: 16.09.1996
(51) Int. Cl.: G21C 19/28, G21C 17/022, G21D 1/02

(54) **EINRICHTUNG ZUM BEGASEN DES PRIMÄRKÜHLMITTELS EINES DRUCKWASSERREAKTORS**
DEVICE FOR INTRODUCING GAS INTO THE PRIMARY COOLANT IN A PRESSURISED WATER REACTOR
DISPOSITIF D'INJECTION D'UN GAZ DANS L'AGENT DE REFROIDISSEMENT PRIMAIRE D'UN REACTEUR A EAU SOUS PRESSION

(30) Priorität: 29.09.1995 DE 19536450
(43) Veröffentlichungstag der Anmeldung: 15.07.1998
(73) Patentinhaber: SIEMENS AKTIENGESELLSCHAFT, 80333 München (DE)
(72) Erfinder: PUTHAWALA, Anwer, D-91054 Buckenhof (DE); STÜNKEL, Helmut, D-91054 Erlangen (DE)
(86) Internationale Anmeldenummer: EP9604057
(87) Internationale Veröffentlichungsnummer: WO9713253

(56) Entgegenhaltungen:
- EP-A- 0 328 408
- DE-A- 2 828 153
- FR-A- 2 407 554
- US-A- 3 975 170

## Beschreibung

Die Erfindung betrifft eine Einrichtung zum Begasen des flüssigen Primärkühlmittels eines Druckwasserreaktors mit Wasserstoff, wobei der Druckwasserreaktor mit einem Volumenausgleichsbehalter und mit mindestens einer nachgeschalteten Hochdruckpumpe ausgerüstet ist.

In dem Buch "VGB-Kernkraftwerks-Seminar 1970", insbesondere Seite 41, ist für einen Druckwasserreaktor ein Volumenregelsystem für das Primärkühlmittel beschrieben. Zu diesem System, das ständig von einem Teil des Primärkühlmittels durchströmt wird, gehört auch eine Einrichtung zur Begasung mit Wasserstoff. Damit soll der radiolytischen Zersetzung des Kühlmittels im Zentralbereich des Kernreaktors entgegengewirkt werden. Bei dieser bekannten Begasungseinrichtung wird der Wasserstoff in einen zum Volumenregelsystem gehörenden Volumenausgleichsbehälter eingegeben. Er ist hier über dem Flüssigkeitsspiegel als Gaspolster vorhanden. Der Wasserstoffpartialdruck im Gaspolster wird entsprechend der gewünschten Wasserstoffkonzentration im Primärkühlmittel eingestellt.

Der Nachteil dieser Begasungseinrichtung besteht darin, daß im Falle von Leckagen des Volumenausgleichsbehälters Wasserstoff entweicht, was zur Bildung von explosionsgefährlichem Knallgas führen kann. Man ist daher bestrebt, mit Wasserstoff gefüllte Gasraume - wie weitgehend in der Reaktortechnik - zu vermeiden oder zumindest möglichst klein zu halten. Ein weiterer Nachteil dieser Begasungseinrichtung besteht darin, daß Abweichungen der Wasserstoffkonzentration im Primärkühlmittel gegenüber dem im Gaspolster herrschenden Wasserstoffpartialdruck sich nur langsam ausregeln.

Eine Weiterentwicklung der vorerwähnten Begasungseinrichtung ist aus der Deutschen Patentschrift DE 28 28 153 bekannt. Die Wasserstoffbegasung des Primärkühlmittels erfolgt dort in einer parallel zu dem Volumenausgleichsbehälter angeordneten Umgehungsleitung. In dieser Umgehungsleitung, die in die Saugleitung zwischen dem Volumenausgleichsbehälter und drei parallel arbeitenden Hochdruckpumpen mündet, liegen hinter der Wasserstoff-Einspeisestelle ein Mischer und ein Gasabscheider. Zur Einspeisestelle führt eine Wasserstoff-Einspeiseleitung mit einem Regelventil, das von einer Regeleinrichtung gesteuert ist. Die Regeleinrichtung ist in nicht weiter dargestellter Weise mit den Werten des Wasserstoffgehalts im Kühlwasser und dem Betriebszustand des Gasabscheiders gespeist.

Der Nachteil dieser Begasungseinrichtung besteht darin, daß der Wasserstoffgehalt des Primärkühlmittels nicht exakt einstellbar ist. Dies liegt daran, daß das in der Umgehungsleitung begaste Primärkühlmittel in der Saugleitung mit Primärkühlmittel anderer Wasserstoffkonzentration, welches vom Volumenausgleichsbehälter kommt, zusammentrifft und gemischt wird. Darüber hinaus ist bei dem beschriebenen Regelkonzept im Gasabscheider zwangsläufig eine gewisse Menge an Wasserstoff gasförmig vorhanden. Das Regelkonzept ist relativ kompliziert, und die Einstellung der Wasserstoff-Konzentration erfordert vergleichsweise viel Zeit. Die Regeleinrichtung ist darüber hinaus recht kostenaufwendig.

Das zum Patent DE 28 28 153 erteilte Zusatzpatent 29 48 297 bildet die obige Begasungsreinrichtung dadurch weiter, daß der Wasserstoff in einem Flüssigkeitsstrahlverdichter gefördert wird, der mit dem Primärkühlmittel als Flüssigkeit arbeitet. Auch diese Lösung ist mit den obigen Nachteilen behaftet.

Aus der FR-A-2 407 554 ist ein Begasungssystem bekannt, bei dem Wasserstoff direkt in eine Hochdruckpumpe eingespeist wird, um eine besonders hohe Genauigkeit bei der Einstellung des Waserstoffgehalts zu erzielen.

Aufgabe der Erfindung ist es, eine Einrichtung der eingangs genannten Art anzugeben, bei der die außerhalb des Flüssigkeitsvolumens des Volumenausgleichsbehälters vorhandene Wasserstoffmenge möglichst klein gehalten werden kann und bei der mit relativ einfachen Mitteln eine schnelle und exakte Einstellung des Wasserstoffgehalts im Kühlmittel gewährleistet ist.

Diese Aufgabe wird erfindungsgemäß gelöst durch eine Einrichtung, gemäß Anspruch 1.

Nach der Erfindung ist also auf der Druckseite der Hochdruckpumpe die (mit dem Volumenausgleichsbehälter oder mit einem Entwässerungssystem in Verbindung stehende) Meßleitung vorgesehen. In diese Meßleitung ist die Einrichtung zum Messen des Wasserstoffgehalts im Kühlmittel eingeschaltet. Da die auf der Druckseite der Hochdruckpumpe(n) zu Meßzwecken entnommene Kühlmittelrate von üblicherweise 5 bis 15 Litern pro Stunde relativ gering ist, kann diese Meßleitung, wie erwähnt, mit dem Entwässerungssystem des Kernreaktors verbunden sein.

Die erfindungsgemäße Lösung bietet den Vorteil, daß der Wasserstoffgehalt im Kühlmittel rasch und exakt einstellbar ist. Toträume für Wasserstoff sind auf ein Mindestmaß beschränkt. Ein Gasabscheider ist nicht erforderlich.

Wie erwähnt, ist die Einrichtung mit einer Regeleinrichtung zur Ansteuerung des erwähnten Regelventils verbunden. Gemäß einer weiteren Ausgestaltung der Erfindung ist dieses Regelventil zwischen einen Wasserstoffvorrat und die Einspeisestelle geschaltet. Dies ermöglicht einen automatischen Betrieb der Wasserstoffbegasung des Kühlmittels.

Gemäß einer weiteren vorteilhaften Ausgestaltung der Erfindung ist stromabwärts der Einspeisestelle ein Mischer vorgesehen. Durch die Vermischung bereits im Niederdruckteil wird erreicht, daß im Hochdruckteil praktisch nur gelöster Wasserstoff vorliegt.

Vorteilhafterweise ist eine dem Volumenausgleichsbehälter zugeordnete Umgehungsleitung vorgesehen. Dies hat zur Folge, daß der Volumenausgleichsbehälter und damit auch der Gasraum desselben klein gehalten werden können.

Nach einer weiteren vorteilhaften Ausgestaltung der Erfindung mündet die Umgehungsleitung stromaufwärts der Einspeisestelle in die zwischen dem Volumenausgleichsbehälter und der Hochdruckpumpe angeordnete Saugleitung ein. Dadurch wird das gesamte, der Hochdruckpumpe zugeführte Kühlmittel weitgehend auf einen gleichmäßigen Wasserstoffgehalt gebracht.

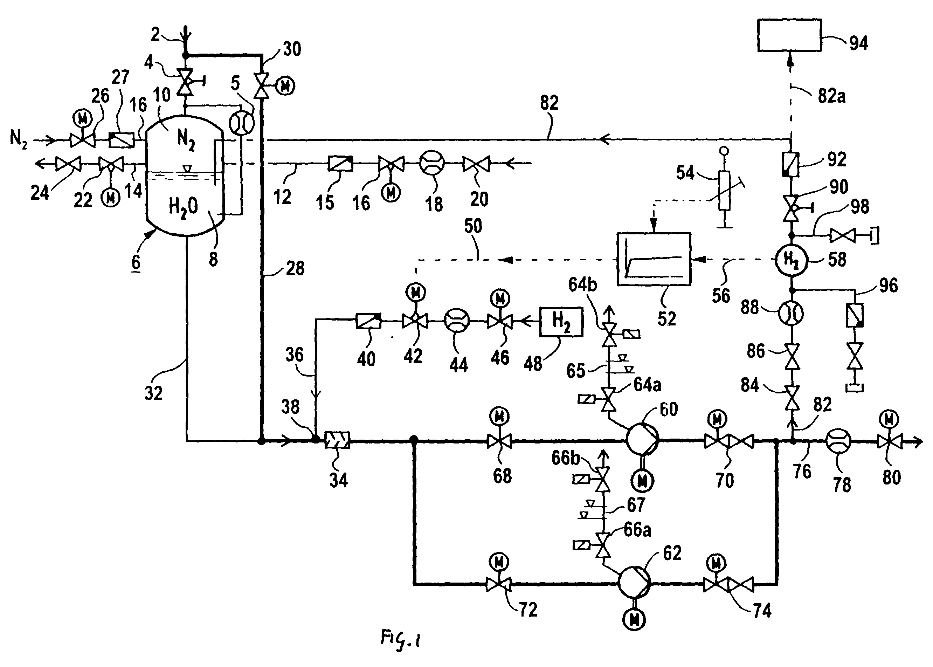

Ein Ausführungsbeispiel der Erfindung ist in der Zeichnung dargestellt und wird im folgenden näher beschrieben. Die Figur zeigt ein Prinzipschaltbild.

Die Figur zeigt eine Einrichtung zum Begasen des Primärkühlmittels eines Druckwasserreaktors. Ein von einem nicht dargestellten Primärkühlkreis des Druckwasserreaktors abgezweigter Leitungsstrang 2 führt über ein Handregelventil oder eine Armatur 4 und einen Durchflußmesser 5 in den unteren Teil eines Volumenausgleichsbehälters 6. Der Volumenausgleichsbehälter 6 ist in seinem unteren Bereich 8 mit einem Primärkühlmittel gefüllt, z.B. mit Wasser H₂O. Ein im Volumenausgleichsbehälter 6 oberhalb des Primärkühlmittels angeordneter Gasraum 10 ist über Leitungsstränge 12, 14 mit einem (nicht gezeigten) Abgassystem und über eine Zuleitung 16 mit einem Stickstoffanschluß verbunden . Im Leitungsstrang 12 sind ein Rückschlagventil 15, ein Regelventil 16, ein Durchflußmesser 18 und eine Armatur 20 enthalten; sie sind Bestandteile eines an sich bekannten Durchsatz-Regelsystems für Stickstoff (vgl. DE-PS 28 28 153). Im Leitungsstrang 14 sind ein Regelventil 22 und eine Armatur 24 enthalten; sie sind Bestandteile eines an sich bekannten Druck-Regelsystems für Stickstoff und eventuell enthaltenen Wasserstoff (vgl. DE-PS 28 28 153). Der Gasraum 10 ist im wesentlichen mit Stickstoff N₂ gefüllt. Stickstoff N₂ kann über die Zuleitung 16 und ein Ventil 26 sowie ein Rückschlagventil 27 zugeführt werden.

Parallel zum Volumenausgleichsbehalter 6 ist eine Umgehungsleitung 28 mit einem Regelventil 30 angeordnet. Sie führt vom Leitungsstrang 2 zu einer unten angeschlossenen Saugleitung 32; der Durchfluß ist mit dem Regelventil 30 motorisch einstellbar. Mit Hilfe des Regelventils 30 und der Armatur 4 wird eine Bor-Konzentrations-Nachführung im Volumenausgleichsbehälter 6 vorgenommen. Die Zuführung des Bors findet am Eingang der Leitung 2 statt und ist nicht näher dargestellt. Es wird eine gewisse Durchflußrate kontinuierlich vom Hauptfluß über die Armatur 4 abgenommen, in den Volumenausgleichsbehalter 6 geleitet und nach der Vermischung mit dessen Inhalt unten über die Leitung 32 wieder abgeführt.

Stromabwärts der Einmündung der Umgehungsleitung 28 ist in der Saugleitung 32 ein statischer Mischer 34 vorgesehen. Er dient zur H₂-Einmischung. Eine Wasserstoff-Speiseleitung 36 mündet an einer Einspeisestelle 38 vor dem Mischer 34 in die Saugleitung 32. Sie kann auch in den Mischer 34 geführt sein. Die Wasserstoffspeiseleitung 36 weist ein Rückschlagventil 40, ein motorisch betätigbares Einstellorgan oder Regelventil 42, einen Durchflußmesser 44 und einen über ein Absperrventil 46 absperrbaren Wasserstoffvorrat 48 auf. Das Regelventil 42 ist über eine Ansteuerleitung 50 mit einem Regler oder einer Regeleinrichtung 52 mit einstellbarem Sollwertgeber 54 verbunden. Hier kann ein Sollwert für den gewünschten Wasserstoffgehalt eingestellt werden. Die Regeleinrichtung 52 ist über eine Meßleitung 56 mit einer Meßeinrichtung 58 für Wasserstoff H₂ verbunden. Bei dieser H₂-Meßeinrichtung 58 kann es sich insbesondere um eine solche handeln, die von der Fa. Orbisphere laboratories, CH-2000 Neuchatel, Schweiz, vertrieben wird.

Stromabwärts vom Mischer 34 sind in zueinander parallelen Strecken zwei Hochdruckpumpen 60, 62 mit Entlüftungsarmaturen 64a, 64b bzw. 66a, 66b vorgesehen, zwischen denen Gasmeßeinrichtungen 65 bzw. 67 zur Feststellung, ob Gas in den betreffenden Leitungen vorhanden ist, angeordnet sind. Wenn Gas detektiert wird, wird die jeweils äußere Armatur 64b, 66b geöffnet, und die innere Armatur 64a, 66a geschlossen, so daß das Gas entweichen kann. Die Pumpen 60, 62 sind zwischen ein erstes und ein zweites Ventil 68 und 70 bzw. zwischen ein drittes und viertes Ventil 72 und 74 geschaltet. Die Hochdruckpumpen 60, 62 fördern das Primärkühlmittel größtenteils aus der Umgehungsleitung 28 über eine gemeinsame Druckleitung 76, einem Durchflußmesser 78 und ein Ventil 80 zum Primärkreislauf zurück.

Die Anordnung des Volumenausgleichsbehälters 6 hat verschiedene Aufgaben: Zum einen sorgt er für einen Ausgleich von Höhenniveau-Schwankungen des Primärkühlmittels auf der Saugseite der Hochdruckpumpen 60, 62. Zum anderen sorgt er für eine Kühlmittelreserve (von z.B. 12,5 cbm), falls irgendeine (nicht gezeigte), vor dem Regelventil 30 liegende Armatur die Zufuhr von Primärkühlmittel fehlerhafterweise zu den Hochdruckpumpen 60, 62 sperrt oder unterbricht. Diese Pumpen 60, 62 müssen aus Sicherheitsgründen ständig weiterlaufen.

Von der Druckleitung 76 zweigt eine Meß- oder Abzweigleitung 82 ab. In dieser Meßleitung 82 liegen nacheinander Ventile 84, 86, ein Durchflußmeßgerät 88, die Meßeinrichtung 58 zur On-line-Messung des Wasserstoffgehalts im Primärkühlmittel, eine Drosseleinrichtung 90 und ein Rückschlagventil 92. Die Meßleitung 82 führt dann in den unteren Teil 8 des Volumenausgleichsbehälters 6. Alternativ kann sie auch in den Gasraum 10 oder aber in ein Entwässerungssystem 94 geführt sein. Letzeres ist mittels einer gestrichelt angedeuteten Leitung 82a dargestellt. Am Meßgerät 58 zur Bestimmung des gelösten Wasserstoffs sind noch Zweige 96, 98 vorgesehen. Diese Zweige 96, 98 dienen dazu, das Meßgerät 58 nach einer gewissen Betriebszeit (mit Hilfe eines nicht gezeigten Wasserstoff-Behälters) nachzukalibrieren bzw. die Meßleitung 82 bei Bedarf zu entwässern oder zu entlüften.

Über die Meßleitung 82 wird nur eine relativ kleine Rate des Kühlmittels aus der Druckleitung 76 abgezweigt, z.B. 5 bis 10 l/h. Das abgezweigte Kühlmittel wird entweder in den Kühlmittelweg über den Volumenausgleichsbehälter 6 zurückgespeist oder aber in das Entwässerungssystem 94 abgeleitet.

Die Funktionsweise der dargestellten Einrichtung ist folgende:

Die Einstellung der Wasserstoffbegasung des Primärkühlmittels erfolgt über das Regelventil 42, welches von der Regeleinrichtung 52 angesteuert wird, auf der Niederdruckseite der beiden Hochdruckpumpen 60, 62, also auf deren Saugseite. Die Wasserstoffeinspeisung findet an der Einspeisestelle 38 statt. Die Regelgröße, nämlich der Wasserstoffgehalt im Primärkühlmittel (z.B. Wasser), wird dagegen auf der Druckseite der beiden Hochdruckpumpen 60, 62 mittels der Meßeinrichtung 58 in der Meßleitung 82 kontinuierlich gemessen. Die Regeleinrichtung 58 hat die Aufgabe, die Wasserstoff-Konzentration im Hauptkühlmittel auf dem vorgegebenen Sollwert, der z.B. 2,5 ppm betragen kann, zu halten.

Die dargestellte Einrichtung ermöglicht eine eindeutige Begasung, d.h. die Herstellung einer definierten Wasserstoff-Konzentration im Kühlmittel (Wasser). Sie zeichnet sich durch einen einfachen Aufbau aus. Unnötige Gasraume sind vermieden.

## Patentansprüche

1. Einrichtung zum Begasen des flüssigen Primärkühlmittels eines Druckwasserreaktors mit Wasserstoff, wobei der Druckwasserreaktor mit mindestens einer Hochdruckpumpe (60, 62) ausgerüstet ist, mit
a) einer Einspeisestelle (38) für den Wasserstoff in der Saugleitung (32) der Hochdruckpumpe (60, 62),
b) einer Regeleinrichtung (52), die eingangsseitig mit einer Meßeinrichtung (58) verbunden ist, und mit
c) einem Regelventil (42) in einer Wasserstoff-Speiseleitung (36), die zur Einspeisestelle (38) führt, wobei das Regelventil (42) an den Ausgang der Regeleinrichtung (52) angeschlossen ist,
**dadurch gekennzeichnet**, daß
d) die Meßeinrichtung (58) zur Messung der Wasserstoff-Konzentration in eine Meßleitung (82) geschaltet ist, die von der Druckleitung (76) hinter der Hochdruckpumpe (60, 62) abzweigt.

2. Einrichtung nach Anspruch 1,
**dadurch gekennzeichnet**, daß die Meßleitung (82) entweder in einen gegebenenfalls vorhandenen Volumenausgleichsbehälter (6) oder in ein Entwässerungssystem (94) führt.

3. Einrichtung nach Anspruch 1 oder 2,
**dadurch gekennzeichnet**, daß die Hochdruckpumpe (60, 62) das aus einem Kühlkreis entnommene Primärkühlmittel wieder in den Kühlkreis einspeist.

4. Einrichtung nach einem der Ansprüche 1 bis 3,
**dadurch gekennzeichnet**, daß das Regelventil (42) in der Wasserstoff-Speiseleitung (36) zwischen einem Wasserstoffvorrat (48) und der Einspeisestelle (38) angeordnet ist.

5. Einrichtung nach einem der Ansprüche 1 bis 4,
**dadurch gekennzeichnet**, daß in der Saugleitung (32) ein Mischer (34) angeordnet ist.

6. Einrichtung nach Anspruch 5,
**dadurch gekennzeichnet**, daß der Mischer (34) stromabwärts der Einspeisestelle (38) angeordnet ist.

7. Einrichtung nach einem der Ansprüche 1 bis 6,
**dadurch gekennzeichnet**, daß einem an die Saugleitung (32) angeschlossenen Volumenausgleichsbehälter (6) eine Umgehungsleitung (28) mit Ventil (30) zugeordnet ist.

8. Einrichtung nach Anspruch 7,
**dadurch gekennzeichnet**, daß die Umgehungsleitung (28) stromaufwärts der Einspeisestelle (38) in die Saugleitung (32) zwischen dem Volumenausgleichsbehälter (6) und der Hochdruckpumpe (60, 62) mündet.

9. Einrichtung nach einem der Ansprüche 1 bis 8,
**dadurch gekennzeichnet**, daß die Regeleinrichtung (52) als Proportionalregler ausgeführt ist.

## Claims

1. Device for admitting hydrogen into the liquid primary coolant of a pressurized water reactor, with the pressurized water reactor being equipped with at least one high-pressure pump (60, 62), having
a) an infeed point (38) for the hydrogen in the suction line (32) of the high-pressure pump (60, 62),
b) a control device (52) which is connected on the input side to a measuring device (58), and having
c) a control valve (42) in a hydrogen feed line (36) which leads to the infeed point (38), with the control valve (42) being connected to the output of the control device (52),
characterized in that
d) the measuring device (58) for measuring the hydrogen concentration is connected into a measuring line (82) which branches off from the pressure line (76) behind the high-pressure pump (60, 62).

2. Device according to claim 1, characterized in that the measuring line (82) leads either into a possibly present volume equalizing tank (6) or into a drainage system (94).

3. Device according to claim 1 or 2,
characterized in that the high-pressure pump (60, 62) feeds the primary coolant, removed from a cooling circuit, into the cooling circuit again.

4. Device according to one of claims 1 to 3,
characterized in that the control valve (42) in the hydrogen feed line (36) is arranged between a hydrogen supply (48) and the infeed point (38).

5. Device according to one of claims 1 to 4,
characterized in that a mixer (34) is arranged in the suction line (32).

6. Device according to claim 5, characterized in that the mixer (34) is arranged downstream of the infeed point (38).

7. Device according to one of claims 1 to 6, characterized in that a bypass line (28) with valve (30) is allocated to a volume equalizing tank (6) connected to the suction line (32).

8. Device according to claim 7, characterized in that the bypass line (28) upstream of the infeed point (38) opens into the suction line (32) between the volume equalizing tank (6) and the high-pressure pump (60, 62).

9. Device according to one of claims 1 to 8, characterized in that the control device (52) is designed as a proportional controller.

## Revendications

1. Dispositif pour injecter de l'hydrogène gazeux dans le fluide de refroidissement primaire liquide d'un réacteur à eau sous pression, le réacteur à eau sous pression étant équipé d'au moins une pompe haute pression (60, 62), et comportant :
a) un point d'injection (38) pour injecter l'hydrogène dans la conduite d'aspiration (32) de la pompe haute pression (60, 62),
b) un dispositif de régulation (52), qui côté entrée est relié à un dispositif de mesure (58), et
c) une vanne de régulation (42) dans la conduite d'injection d'hydrogène (36), qui conduit au point d'injection (38), la vanne de régulation (42) étant raccordée à la sortie du dispositif de régulation (52),
caractérisé en ce que
d) le dispositif de mesure (58), destiné à mesurer la concentration de l'hydrogène, est monté dans une ligne de mesure (82), qui part de la conduite de pression (76) en aval de la pompe haute pression (60, 62).

2. Dispositif selon la revendication 1, caractérisé en ce que la ligne de mesure (82) va dans un réservoir compensateur de volume éventuellement présent (6), ou dans un système de déshydratation (94).

3. Dispositif selon la revendication 1 ou 2, caractérisé en ce que la pompe haute pression (60, 62) renvoie dans le circuit de refroidissement le fluide de refroidissement primaire prélevé d'un circuit de refroidissement.

4. Dispositif selon l'une des revendications 1 à 3, caractérisé en ce que la vanne de régulation (42) est, dans la conduite (36) d'injection d'hydrogène, montée entre un réservoir d'hydrogène (48) et un point d'injection (38).

5. Dispositif selon l'une des revendications 1 à 4, caractérisé en ce qu'un mélangeur (34) est disposé dans la conduite d'aspiration (32).

6. Dispositif selon la revendication 5, caractérisé en ce que le mélangeur (34) est disposé en aval du point d'injection (38).

7. Dispositif selon l'une des revendications 1 à 6, caractérisé en ce qu'une conduite d'évitement (28) munie d'une vanne (30) est associée à un réservoir compensateur de volume (6) raccordé à une conduite d'aspiration (32).

8. Dispositif selon la revendication 7, caractérisé en ce que la conduite d'évitement (28) débouche, en amont du point d'injection (38), dans la conduite d'aspiration (32) entre le réservoir compensateur de volume (6) et la pompe haute pression (60, 62).

9. Dispositif selon l'une des revendications 1 à 8, caractérisé en ce que le dispositif de régulation (52) est réalisé sous la forme d'un régulateur proportionnel.
